# EUROPEAN PATENT APPLICATION

(11) **EP 4 588 825 A1**
(43) Date of publication of application: **23.07.2025**
(21) Application number: 24153023.7
(22) Date of filing: 22.01.2024
(51) Int. Cl.: B65G 1/04

(54) **A ROBOTIC VEHICLE**

(71) Applicant: AUTOSTORE TECHNOLOGY AS, 5578 Nedre Vats (NO)
(72) Inventor: Skålerud, Amund, 5578 Nedre Vats (NO)
(74) Representative: Kilburn & Strode LLP

(57) **Abstract**

The disclosure relates to a robotic vehicle for handling storage containers in a container storage and retrieval system. The robotic vehicle comprises a gripping device configured to releasably engage a storage container; a primary lifting device configured to raise and lower the gripping device; a secondary lifting device configured to raise and lower the primary lifting device; and a drive mechanism for driving the primary lifting device and the secondary lifting device. The drive mechanism comprises a torque transfer element configured to releasably engage the primary lifting device. The torque transfer element, when engaged with the primary lifting device, is configured to provide a torque for raising and lowering the gripping device.

## Description

### TECHNICAL FIELD

The disclosure relates to a robotic vehicle. More particularly, it relates to a robotic vehicle comprising two or more lifting devices and corresponding container storage and retrieval systems, methods and computer-readable media.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some automated and storage retrieval systems, the stacked containers are arranged in discrete sections that cannot be traversed by the robots, e.g. on different stories within a building or on a mezzanine level. This creates a division between the sections that limits the passing of containers across the division, e.g. requiring manual intervention to remove a container from one section and supply it to a different section, or having additional infrastructure such as conveyors and lift columns to transport containers between the different sections.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a robotic vehicle having both a primary lifting device and a secondary lifting device;
Fig. 6 shows schematic cross-sectional view of the primary and secondary lifting devices as shown in Fig. 5;
Fig. 7 shows a mechanism for transferring torque between the primary lifting device and secondary lifting device as shown in Fig. 5;
Fig. 8 shows an automated container storage and retrieval system; and
Fig. 9 shows a method of operating a robotic vehicle.

### DETAILED DESCRIPTION

In overview, the disclosure relates to a robotic vehicle for handling storage containers, such as bins, by lifting them out of the stacks, transporting them across the system and lowering into another stack or other part of the system. The robotic vehicle grips a storage container using a gripping device which is raised and lowered, relative to the rest of the robotic vehicle, by a primary lifting device. The primary lifting device can also be raised and lowered, relative to the rest of the robotic vehicle, by a secondary lifting device. For example, the lifting mechanisms of the primary and secondary lifting devices may be such that the gripping device is suspended below the primary lifting device on bands, such as wires or strips of any suitable material, that are retracted or let out to raise or lower the gripping device, respectively, and likewise for the primary lifting device suspended below the secondary lifting device on bands. When the primary lifting device is raised or lowered, this also raises and lowers the gripping device and, if present, a storage container held by the gripping device. As such, a robotic vehicle with a multistage lifting apparatus is provided. A robotic vehicle with both the primary and secondary lifting devices has a greater lift depth than a robotic vehicle with only a single lifting device. This provides a robotic vehicle that can service a container storage and retrieval system with higher stacks of container, and therefore a greater overall volume of stock that can be stored.

The greater lift depth provided by using both a primary lifting device and a secondary lifting device also enables the transfer of a storage container between sections of the container storage and retrieval system on different levels. For example, a first section of the system on a higher level than a second section on a lower level can be connected through a hole in the floor of the higher level at a location above part of the second section. By utilising the greater lift depth, a robotic vehicle on the higher level can pass a storage container below the depth of the stacks on the higher level, through the hole and into a stack on the lower level.

Using a primary lifting device and a secondary lifting device that is configured to raise and lower the primary lifting device provides a stable and reliable lifting apparatus, e.g., compared to a single lifting device with double the length of lifting bands. This is because using two lifting devices rather than one with longer lifting bands reduces instability caused by waves propagating up and down the lifting bands. Another cause of unreliability of longer lifting bands is variation in the loads experienced by lifting bands when there is a long depth down to the object being lifted, e.g. due to the load swaying, which can lead to unequal retraction rates between lifting bands and skewing the gripping device and storage container being lifted. Using two lifting devices maintains a more even tension in lifting bands which provides stability and reliability.

The robotic vehicle has a drive mechanism for driving the primary lifting device and the secondary lifting device. The drive mechanism includes a torque transfer element to releasably engage the primary lifting device and, when engaged, provides a torque for the primary lifting device to raise or lower the gripping device. This means that the primary lifting device can be mechanically driven by the secondary lifting device and the primary lifting device does not need to include its own dedicated motor or power source. This can provide a lighter and simpler lifting device with fewer maintenance or charging needs.

### Automated storage and retrieval system overview

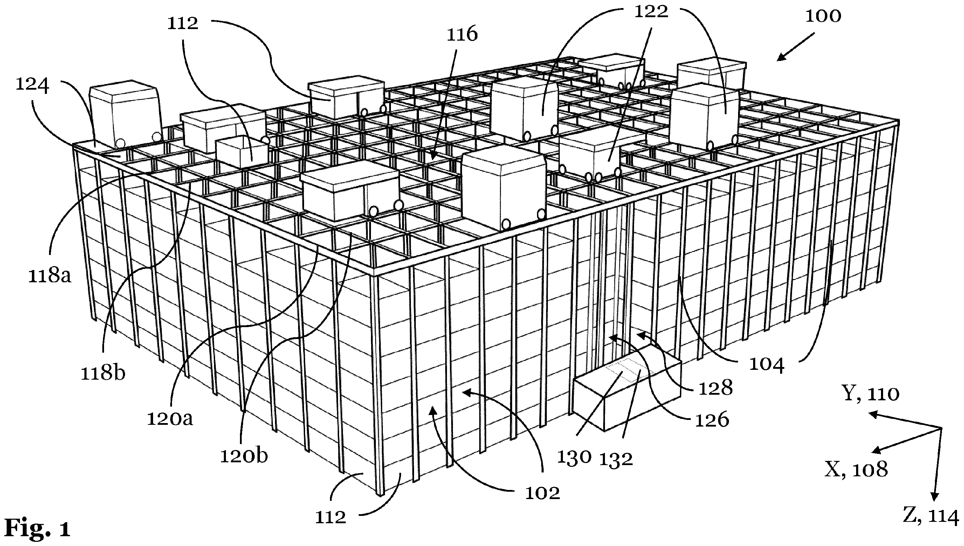

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

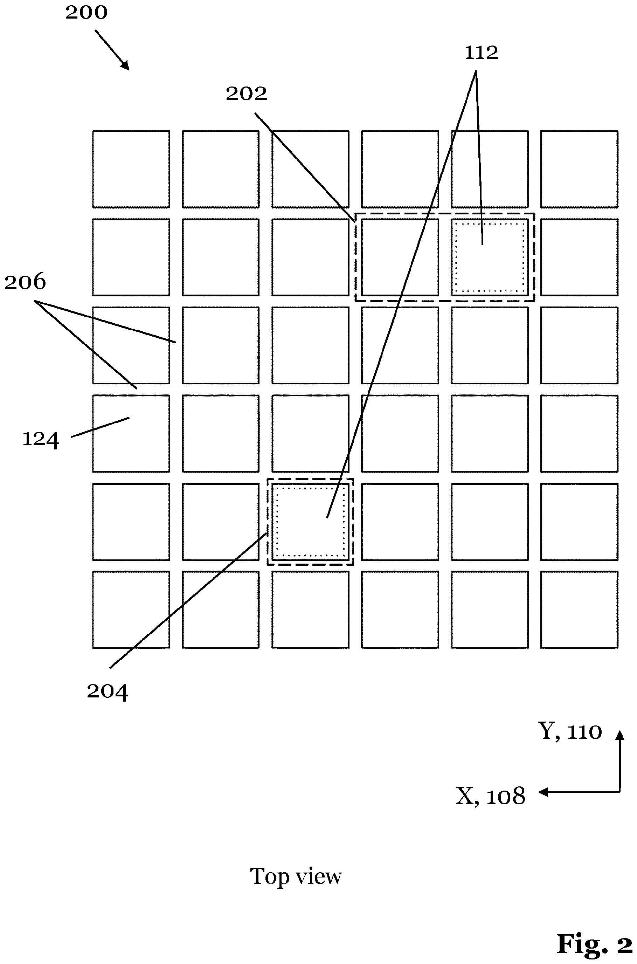

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

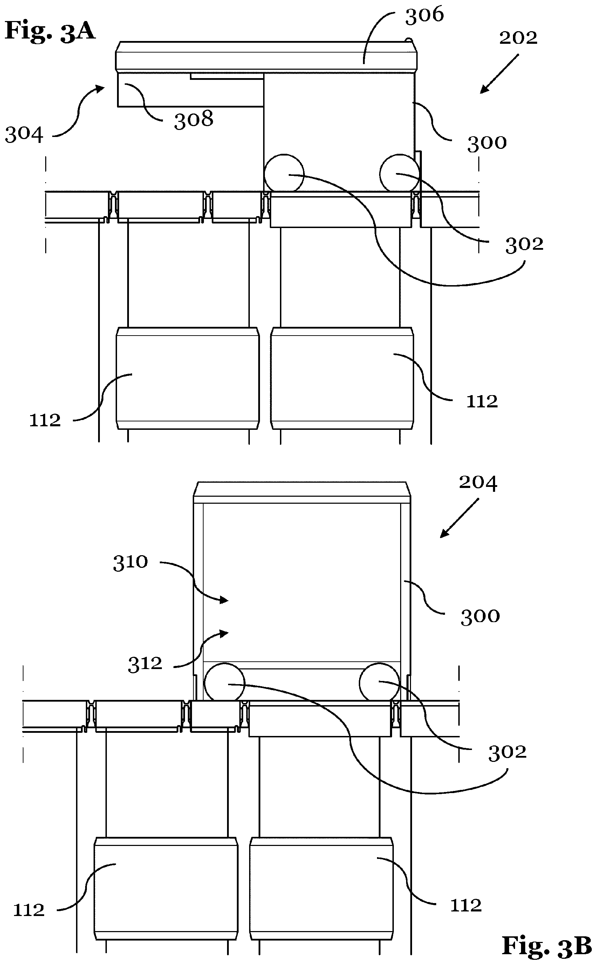

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

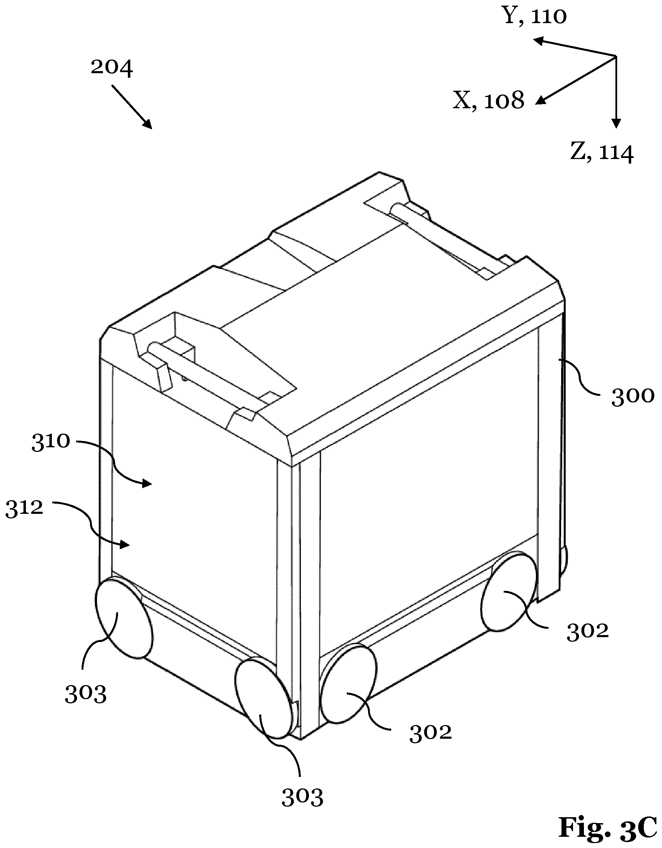

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

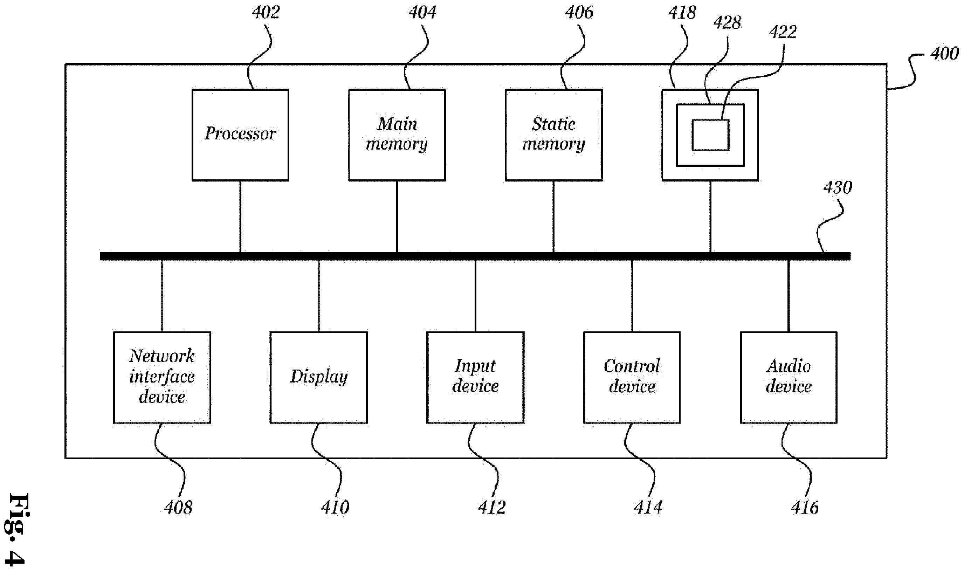

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements to lifting apparatus

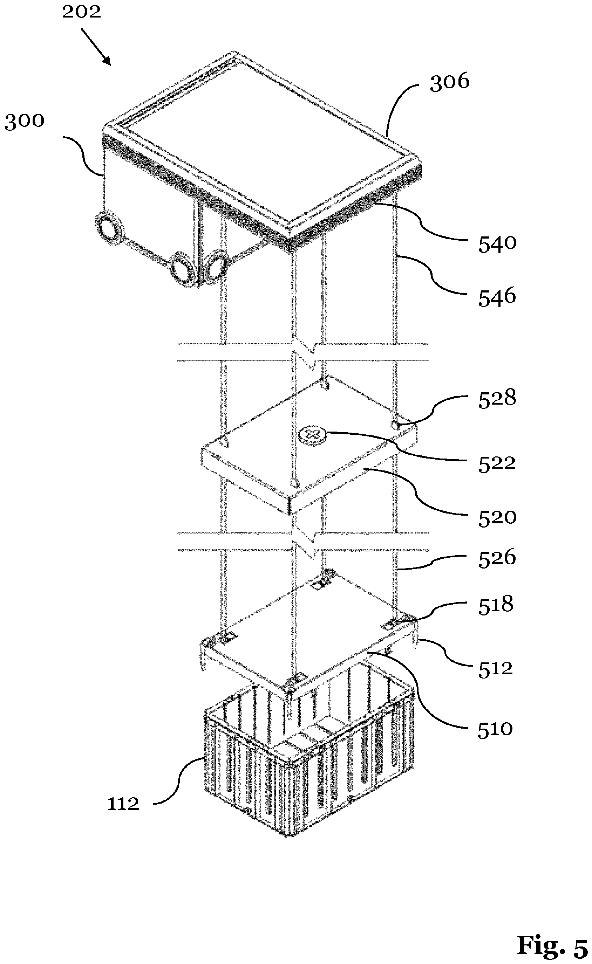

With reference to Fig. 5, a robotic vehicle 202 has a body 300 and a cantilever arm 306, as described above with reference to Fig. 3A. The robotic vehicle 202 can lift a bin 112 from a storage and retrieval system using a gripping device 510, in the form of a gripping plate, suspended from a primary lifting device 520 by four primary lifting bands 526. The gripping device 510 has actuatable grippers 512 that grip onto the bin 112 for lifting or lowering. In alternative examples, the gripping device 510 may releasably engage the bin 112 using any suitable mechanism, such as hooks, screws, electromagnets, etc. The primary lifting bands 526 are connected to the gripping device 510 at corners of the gripping plate, using clasps, bolts, knots, etc. at fastenings 518. The gripping plate holds the grippers 512 in alignment with corresponding handles on the bin 112 that can be used to grip and lift the bin 112. In some examples, the grippers 512 can be actuated by microprocessors controlled by signals received along the primary lifting bands. In alternative examples, the grippers 512 can be actuated wirelessly, or a purely mechanical grip such as a push-to-grip and push-to-release mechanism.

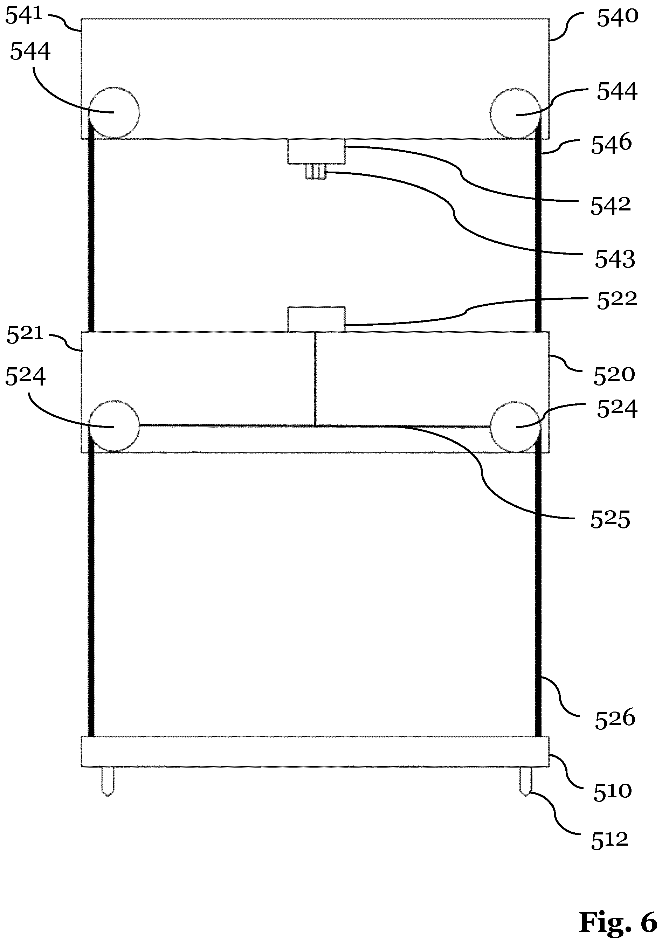

The primary lifting bands 526 can be retracted and let out by the primary lifting device 520 to raise or lower the gripping device 510. With reference to Fig. 6, the primary lifting bands are wound and unwound on spools 524. This is done by providing a torque to the spools 524 to either wind the primary lifting bands 526 onto the spools 524, thereby retracting the primary lifting bands 526 and raising the gripping device 510, or unwind the primary lifting bands 526 off the spools 524, thereby letting out the primary lifting bands 526 and lowering the gripping device 510. The primary spools 524 are supported by a housing 521 of the primary lifting device and are mounted on respective axels. The torque for rotating the spools 524 and raising or lowering the gripping device 510 is provided to the spools by a torque receiver element 552, via a torque transmission mechanism 525. The torque transmission mechanism 525 may comprise a combination of axels, gears, bevel gears, screw gears, belts, or the like, as known in the art suitable for transmitting a torque from one location to another and/or altering the angle of rotation.

Referring again to Fig. 5, the primary lifting device 520 is suspended from the secondary lifting device 540 by four secondary lifting bands 546. The ends of the secondary bands 546 are connected to the primary lifting device 520 at the corners of the primary lifting device, for example, clasped, bolted, tied, etc., onto the housing 521 of the primary lifting device 520 at fastenings 528. The secondary lifting bands 546 can be retracted and let out by the secondary lifting device 540 to raise or lower the primary lifting device 520. With reference to Fig. 6, the secondary lifting bands 546 are wound and unwound on secondary spools 544 in a similar manner as described above for the primary lifting device. In particular, a torque is provided to the spools 544 to either wind the secondary lifting bands 546 onto the spools 544, thereby retracting the secondary lifting bands 546 and raising primary lifting device 520 and the gripping device 510 with it, or unwind the secondary lifting bands 546 off the spools 544, thereby letting out the secondary lifting bands 546 and lowering the primary lifting device 520 and the gripping device 510. The secondary spools 544 are supported by a housing 541 of the secondary lifting device 540 and are mounted on respective axels. The housing 541 may be integral to the body 300 of the robotic vehicle 202 or the cantilever arm 306, or may be positioned beneath the cantilever arm 306. In a robotic vehicle 204 having an internal cavity for receiving a bin 112, the primary lifting device 520 and secondary lifting device 540 are positioned at the top of the internal cavity, so the gripping device 510 (and primary lifting device) can be lowered through the internal cavity and underneath the robotic vehicle 204 to pick up a bin 112 and raise it into the internal cavity for transportation.

The torque for rotating the secondary spools 544 and raising or lowering the primary lifting device 520 and the gripping device 510 is provided to the spools from the drive (not shown) of the robotic vehicle, for example, the motor used for locomotion or a separate dedicated lift motor. The torque may be supplied to the secondary spools 544 using any suitable combination of axels, gears, bevel gears, screw gears, belts, or the like, as known in the art suitable for transmitting a torque from one location to another and/or altering the angle of rotation.

The primary and secondary lifting bands are each connected, at a first end to the corresponding primary or secondary spool so that rotating the spool will wind the lifting band onto the spool. The opposite end of each lifting band is connected to the corresponding fastening 518, 528 of the gripping device 510 or primary lifting device 520. The lifting bands may be made from any suitable material, such as plastic, metal, rubber, composites, etc., having the appropriate flexibility, thickness, tensile strength for the required implementation.

In examples where signals are carried to the gripping device 510 for control of the grippers 512 through lifting bands, the primary lifting bands 526 and secondary lifting bands 546 are conductive, or at least comprise a conducting material to transmit electrical signals from the control system of the robotic vehicle 202. In these examples, the primary lifting device may comprise an electrical connection between the secondary lifting bands 546 and the primary lifting bands 526 for transmitting the signal therebetween and so that the signal is transmitted on to the grippers 512 to control the grip or release the bin 112.

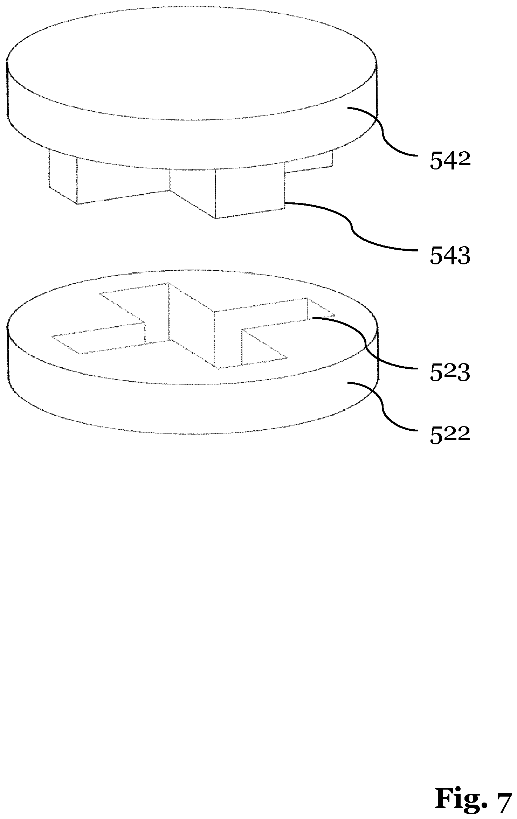

Referring again to Fig. 6, the secondary lifting device 540 comprises a torque transfer element 542 that, when the primary lifting device 520 is in its raised position, will drive the torque receiver element 522 of the primary lifting device and therefore drive the primary spools 524 to raise or lower the gripping device 510. The torque transfer element 542 and torque receiver element 522 are coaxial, i.e. they rotate around a common axis of rotation and have a complementary shape so that, when engaged, the torque transfer element 542 fits into the torque receiving element 522 to provide the torque. With refence to Fig. 7, the shape of the torque transfer element 542 has a cross-shaped protrusion 543, i.e. a prism with a cross-sectional shape of a cross. The torque receiving element 522 has a corresponding cross-shaped recess 523, i.e., having the same size and cross-sectional shape as the cross-shaped protrusion 543. When the torque transfer element 542 and torque receiving element 522 are engaged, e.g., by raising the primary lifting device 520, the cross-shaped protrusion 543 enters the cross-shaped recess 523 and a torque applied to the torque transfer element 542 will be applied to the torque receiving element 522.

Although Fig. 5, 6, and 7 show one particular example of a drive mechanism and torque transfer element, it will be appreciated that there are various options for implementation. In some examples, the shape of the protrusion and recess of the torque transfer element and torque receiving element may be different from cross-shaped (while still complementary), e.g. star-shaped, the shape of a flat-head, or crosshead screwdriver and screw, triangular, square, etc. In some examples, the protrusion and/or the recess has a bevel or a taper to increase the tolerance of misalignment when engaging. In some examples, the torque transfer element has a recess and the torque receiving element has a protrusion. In some examples, the torque transfer element is not coaxial with a torque receiving element, such as two gears with parallel axes of rotation and gear teeth that extend outside of the respective housings of the secondary lifting device and primary lifting device such that they engage when the primary lifting device is in a raised position. Alternatively, rollers could be used instead of gears.

Fig. 5 and 6 show one kind of lifting mechanism, however, it will be appreciated that alternative lifting mechanisms are possible. For example, although the lifting devices described above use four lifting bands, a different number or arrangement could be used and still provide the necessary support for the gripping device or primary lifting device being lifted. In some examples, the primary lifting device and/or secondary lifting device do not comprise an enclosed housing but the components thereof are supported by a frame or other supporting structure. In some examples, the gripping device 510 is not a gripping plate but a frame or other structure. In some examples, the torque for raising or lowering the gripping device or primary lifting device is provided to all spools equally and, in other examples, one or a subset of the spools have the torque applied thereto.

In some examples, the drive mechanism comprises a single motor to provide the torque for driving the primary lifting device and the secondary lifting device. In these examples, the drive mechanism comprises a switch to select between driving the primary lifting device, via the torque transfer element, or driving the secondary lifting device. The switch may comprise an electrical actuator configured to selectively engage one of two gears which connect to either the secondary spools or the torque transfer element. In some examples, the drive mechanism comprises a primary motor and a secondary motor, wherein the primary motor is configured to provide a torque to the torque transfer element and the secondary motor is configured to provide a torque to the secondary spools. In these examples, a switch may be used to selectively control either the primary motor being switched on to provide torque, or the secondary motor being switched on to provide torque. In general, it is undesirable for the secondary spools and torque transfer mechanism to be driven simultaneously, as the secondary lifting device will lower the primary lifting device such that the torque transfer element disengages the primary lifting device and therefore the torque transfer element would not provide torque to the primary lifting device.

In some examples, the robotic vehicle comprises one or more brake to control a rate of rotation of the set of primary spools and/or of the set of secondary spools. Brakes may be applied to all of the spools or a subset of the spools. The brakes maybe configured to impinge on the axle of the corresponding spools to control the rate of rotation of the corresponding spool or spools. The brakes may be drum brakes, hydraulic brakes, disc brakes, friction brakes, electromagnetic brakes, etc., or a combination thereof. The brakes may be controlled by the control system of the robotic vehicle.

In some examples, the robotic vehicle comprises a holding mechanism configured to hold the primary lifting device in a fixed position relative to the secondary lifting device such that the torque transfer element engages the torque receiver element while the primary lifting device is raising or lowering the gripping device, referred to herein as a first configuration. In some examples, the holding mechanism comprises a clip or clasp that can be electrically actuated when the primary lifting device is in a first position engaging the torque transfer element, e.g. by the secondary lifting device raising the primary lifting device. In some examples, instead of a mechanical holding mechanism, the holding mechanism comprises one or more electromagnets that selectively hold the primary lifting device in the first configuration. In some examples, the holding mechanism may use the brakes to prevent the secondary spools from rotating and thereby hold the primary lifting device in place against the torque transfer element by means of tension in the secondary lifting bands.

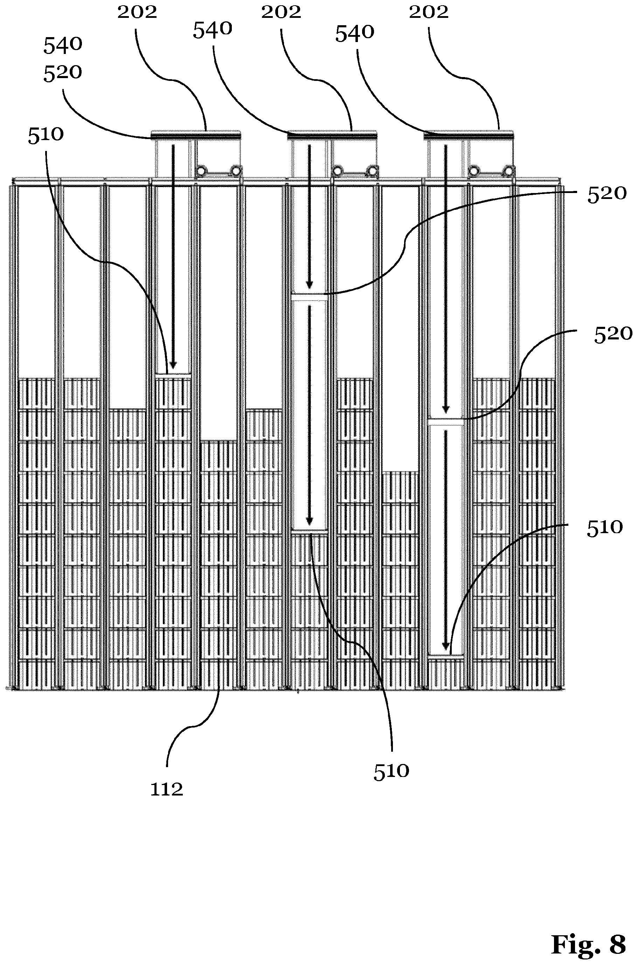

With reference to Fig. 8, in a first configuration (e.g., see the robotic vehicle 202 on the left in Fig. 8), the primary lifting device 520 is in a raised position such that the torque transfer element 542 engages the torque receiving element 522 and drives the primary lifting device 520 to raise or lower the gripping device 510.

In a second configuration (e.g., see the robotic vehicle 202 in the middle in Fig. 8) the primary lifting device 520 has fully let out the primary lifting bands 526 such that they are hanging by their attachments to the primary spools. Accordingly, the gripping device 510 is at a depth limit with respect to the primary lifting device 520, i.e., the maximum extension of the primary lifting bands 526 beneath the primary lifting device 520. In the second configuration, the secondary lifting device 540 has lowered the primary lifting device 520 such that the gripping device is below the depth limit of the primary lifting device 520. In particular, the gripping device 510 is at a depth below the robotic vehicle 202 equal to the extension of the primary lifting bands 526 and the extension of the secondary lifting bands 546 (i.e., the length of secondary lifting bands 546 that has been unwound off the secondary spools 544). Accordingly, the gripping device 510 has been lowered to a greater depth than either the primary lifting device 520 could reach alone and the height of stacks of bins 112 that the robotic vehicle 202 can retrieve from is greater due to the robotic vehicle 202 having multiple lifting devices. In the second configuration, the torque transfer element 542 (not shown in Fig. 8) has disengaged the torque receiving element 522 (not shown in Fig. 8) of primary lifting device 520. This means that the primary lifting device has no drive to independently raise or lower the gripping device 510, however the secondary lifting device 540 raising or lowering the primary 520 will also raise and lower the gripping device 510 to the same extent.

In a third configuration (e.g., see the robotic vehicle 202 on the right in Fig. 8), the primary lifting device 520 has fully let out the primary lifting bands 526 and the secondary lifting device 540 has fully let out the secondary lifting bands 546, such that the gripping device 510 has reached a depth of the maximum depth of the first and second lifting devices, and can collect a lowermost bin 112 from the storage and retrieval system. In container storage and retrieval systems having multiple vertical levels, e.g. across multiple stories of a building, the additional lift depth can be used to pass a bin 112 through an opening in the floor of an upper level and into the part of the system on a lower level.

Any of the robotic vehicle features described above apply to robotic vehicles 202, 204 having either a cantilever arm 306 or an internal cavity 310. Where any feature is shown or described as underneath the cantilever arm 306 of a robotic vehicle 202, such as the primary and secondary lifting devices, the feature can instead be at the top of the internal cavity 310 of a robotic vehicle 204.

### Methods for operating a robotic vehicle

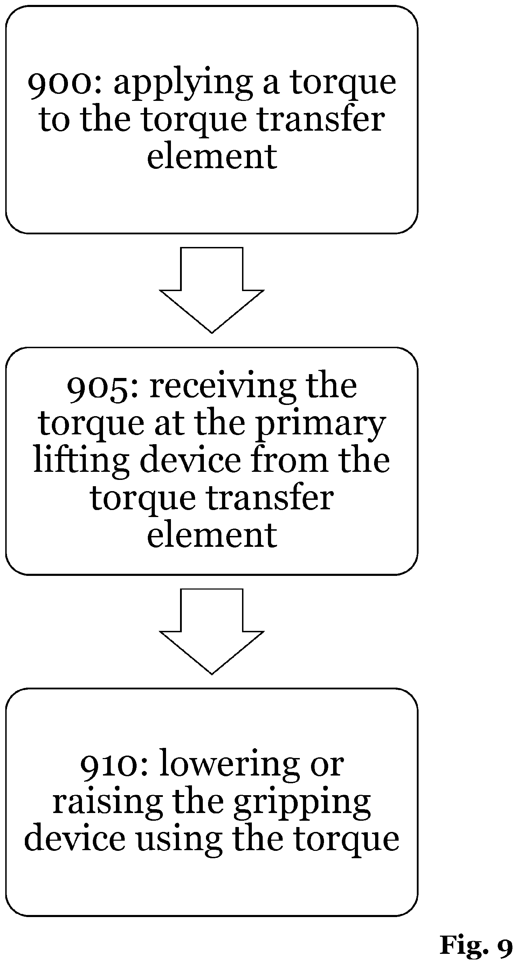

With reference to Fig. 9, a method of operating a robotic vehicle according any of the examples described above comprises: applying 900 a torque to the torque transfer element 542; receiving 905 the torque at the primary lifting device 520, e.g., at the torque receiving element 522, from the torque transfer element 542; and the primary lifting device 520 lowering or raising 910 the gripping device 510 using the torque, e.g., via a torque transmission mechanism 525. It will be understood that the robotic vehicle 202 will be in the first configuration (e.g., see the robotic vehicle 202 on the left in Fig. 8) in order to receive 905 the torque from the torque transfer element 542. In general, driving the torque transfer element 542 in a first direction will raise 910 the gripping device 510 and driving the torque transfer element 542 in a second direction (i.e., the opposite direction) will lower 910 the gripping device 510.

In some examples, the method comprises the secondary lifting device 540 lowering the primary lifting device 520 so that the primary lifting device 520 (e.g., the torque receiving element 522) disengages the torque transfer element 542. This transitions the robotic vehicle from the first configuration to the second configuration, as described above with reference to Fig. 8. The secondary lifting device 540 raising and lowering the primary lifting device 520 therefore controls the raising and lowering of the gripping device.

In some examples, the method comprises the secondary lifting device 540 raising the primary lifting device 520 so that the primary lifting device 520 (e.g., the torque receiving element 522) engages the torque transfer element 542. This transitions the robotic vehicle from the second configuration to the first configuration, as described above with reference to Fig. 8. After this process, the primary lifting device can then be driven by the torque transfer element 542 to raise or lower the gripping device 510.

In some examples, the transition between first and second configurations coincides with switching the drive mechanism between driving the primary lifting device 520 and driving the secondary lifting device 540. This can be performed by an electronically controlled mechanical switch, e.g., in examples using a single lifting motor, or, if there are a plurality of lifting motors, by control signals to turn on/off respective motors that control the primary and secondary lifting devices.

In some examples, the primary lifting device 520 lowers the gripping device 510 to a depth limit of the primary lifting device, i.e., full extension of the primary lifting bands; and the secondary lifting device 540 lowering the primary lifting device to further lower the gripping device 510. As such, the gripping device 510 is lowered below the depth limit of the primary lifting device 520 and the robotic vehicle 202 can retrieve bins from deeper in a stack than a robotic vehicle having only the primary lifting device.

In some examples, the method comprises a bin retrieval routine comprising: lowering the gripping device 510 using the primary lifting device 520 and secondary lifting device 540; gripping a bin 122 from a stack; lifting the gripping device 510 and gripped bin 112 above the grid 100 (above the rails and under the cantilever arm or into an internal cavity); transporting the robotic vehicle across the rail system 116 above the grid 100 to a new location; lowering the gripping device 510 using the primary 520 and secondary lifting device; and releasing the bin 112 from the gripping device 510. The new location may be another storage position or may be a port 130, 132 for removing items from the bin 112. The gripping and releasing of the bin may be controlled by electric signals sent down the primary and secondary lifting bands.

Any of the methods described herein may be instructed by a processing system 400 as described above with reference to Fig. 4, such as the control system (not shown) of the robotic vehicle and/or from a remote control centre in communication with the robotic vehicle. The instructions for performing any of the methods described herein may be stored in a computer-readable medium, e.g. instructions 422 on machine-readable storage media 428 as described above with reference to Fig. 4 (e.g. one or more non-transitory computer-readable storage media).

Any of the methods described above apply to robotic vehicles 202, 204 having either a cantilever arm 306 or an internal cavity 310.

### Concluding comments

Any parts of the robotic vehicles or methods described herein that have not been specifically described can have any suitable form, structure, function, material, etc., such as is known in the art and/or described in earlier publications in the name of AutoStore Technology AS.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for handling storage containers in a container storage and retrieval system, the robotic vehicle comprising:
a gripping device configured to releasably engage a storage container;
a primary lifting device configured to raise and lower the gripping device;
a secondary lifting device configured to raise and lower the primary lifting device; and
a drive mechanism for driving the primary lifting device and the secondary lifting device, wherein the drive mechanism comprises a torque transfer element configured to releasably engage the primary lifting device, wherein the torque transfer element, when engaged with the primary lifting device, is configured to provide a torque for raising and lowering the gripping device.

2. The robotic vehicle of claim 1, wherein the primary lifting device comprises:
a set of primary spools;
a set of primary lifting bands, wherein each primary lifting band is connected, at a first end, to a corresponding primary spool and, at a second end opposite the first end, to the gripping device; and
a torque receiver element configured to receive the torque from the torque transfer element, wherein the torque receiver element is configured to transmit the torque to the set of primary spools thereby raising or lowering the gripping device.

3. The robotic vehicle of claim 2, wherein the torque transfer element and torque receiver element have coaxial axes of rotation.

4. The robotic vehicle of claim 2 or claim 3, wherein the torque transfer element and torque receiver element have complementary shapes.

5. The robotic vehicle of any preceding claim, wherein the secondary lifting device comprises:
a set of secondary spools, wherein the drive mechanism is configured to selectively provide a torque to the set of secondary spools thereby raising or lowering the primary lifting device; and
a set of secondary lifting bands, wherein each secondary lifting band set is connected, at a first end, to a corresponding secondary spool and, at a second end opposite the first end, to the primary lifting device.

6. The robotic vehicle of any of claim 2 to 5, comprising one or more brake to control a rate of rotation of the set of primary spools and/or of the set of secondary spools.

7. The robotic vehicle of any preceding claim, wherein the drive mechanism includes a switch configured to select between:
configured to drive the primary lifting device via the torque transfer element; and
configured to drive the secondary lifting device.

8. The robotic vehicle of any preceding claim, comprising a holding mechanism configured to hold the primary lifting device in a fixed position relative to the secondary lifting device such that the torque transfer element engages the torque receiver element while the primary lifting device is raising or lowering the gripping device.

9. The robotic vehicle of any preceding claim, comprising a cantilever arm, wherein the primary lifting device is arranged beneath the cantilever arm and the secondary lifting device is arranged inside or beneath the cantilever arm.

10. A container storage and retrieval system comprising:
a structure defining a plurality of storage columns for stacking storage containers in;
a storage grid above the storage columns; and
the robotic vehicle of any of claims 1 to 9 configured to traverse the storage grid and handle storage containers.

11. A method of operating a robotic vehicle according to any of claims 1 to 9, the method comprising:
applying a torque to the torque transfer element;
receiving the torque at the primary lifting device from the torque transfer element; and
lowering or raising, by the primary lifting device, the gripping device using the torque.

12. The method of claim 11, the method comprising:
lowering, by the secondary lifting device, the primary lifting device to disengage the torque transfer element.

13. The method of claim 11 or 12, the method comprising:
raising, by the secondary lifting device, the primary lifting device to engage the torque transfer element.

14. The method of any of claims 11 to 13, the method comprising:
lowering, by the primary lifting device, the gripping device to a depth limit of the primary lifting device; and
lowering the primary lifting device to lower the gripping device below the depth limit of the primary lifting device.

15. A computer-readable medium storing instructions for implementing the method of any of claims 11 to 14.
